# EUROPEAN PATENT SPECIFICATION

(11) **EP 3 006 854 B1**
(45) Date of publication and mention of the grant of the patent: **22.01.2020**
(21) Application number: 14807127.7
(22) Date of filing: 23.05.2014
(51) Int. Cl.: F24F 1/01, F24F 1/0011, F24F 13/062, F24F 13/26, B60H 1/34

(54) **AIR-CONDITIONER AIR SUPPLY APPARATUS IN VERTICAL AIR-CONDITIONER**
LUFTZUFUHRVORRICHTUNG FÜR KLIMAANLAGE IN EINER VERTIKALEN KLIMAANLAGE
APPAREIL D'ALIMENTATION EN AIR DE CLIMATISEUR DANS UN CLIMATISEUR VERTICAL

(30) Priority: 03.06.2013 CN 201310215918; 03.06.2013 CN 201320314367 U
(43) Date of publication of application: 13.04.2016
(73) Proprietor: Haier Group Corporation, Qingdao, Shandong 266101 (CN); Qingdao Haier Air Conditioner Gen Corp., Ltd., Qingdao, Shandong 266101 (CN)
(72) Inventor: WANG, Yongtao, Shandong 266101 (CN); GUAN, Tingting, Shandong 266101 (CN); JIA, Guangfen, Shandong 266101 (CN); YAN, Baosheng, Shandong 266101 (CN)
(74) Representative: Ziebig, Marlene
(86) International application number: PCT/CN2014/078208
(87) International publication number: WO 2014/194767

(56) References cited:
- CN-A- 1 384 318
- CN-A- 1 759 279
- CN-A- 102 829 511
- CN-A- 103 453 642
- CN-U- 203 274 148
- JP-A- H10 141 751
- KR-B1- 101 234 065
- KR-B1- 101 234 065
- KR-B1- 101 240 536
- US-A- 2 306 727
- US-A- 2 628 020

## Description

### BACKGROUND

### Technical Field

The present invention relates to the field of air conditioning technologies, in particular, to a vertical air-conditioner structure, and more particularly, to an air-conditioner air supply apparatus in a vertical air-conditioner.

### Related Art

When an existing vertical air-conditioner supplies air, air after a heat exchange of a heat exchanger is directly blown out under the action of an internal fan from an air outlet disposed in the air-conditioner, and all of the blown-out air is heat-exchanged air. Generally, no additional air supply apparatus is disposed between the heat exchanger and the air outlet. One disadvantage of supplying air by such an air-conditioner is that an indoor air circulation speed is low because the supplied air is all heat-exchanged air and has a small volume; and another disadvantage is that the supplied air is not mild enough, and especially in a cooling mode, blown-out cool air directly blows on a user, making the user feel uncomfortable.

To solve the foregoing problems, the applicant proposed an air-conditioner air supply apparatus applicable to an air-conditioner, where the air supply apparatus includes an annular cover body, a through-duct running through the annular cover body is formed in the middle of the annular cover body, an annular opening is formed in a wall of the annular cover body, a certain number of annular deflectors are disposed at the annular opening, and an annular air outlet duct is formed between adjacent annular deflectors. After the air-conditioner air supply apparatus is disposed between a heat exchanger of the air-conditioner and an air outlet of a housing of the air-conditioner, not only an air inlet volume of the air-conditioner is increased and indoor air circulation is accelerated, but also mildness of the air exhausted from the air-conditioner is improved, thereby improving a user comfort experience effect. However, because the annular deflector and the annular air outlet duct are both formed in one annular cover body, it is inconvenient to flexibly select and control structures of the annular deflector and the air outlet duct, and an applicable range is narrow. In addition, for such an air-conditioner air supply apparatus, the structure of the annular air outlet duct is crucial for reducing air resistance and pressure loss, and therefore, design of the structure thereof is also a problem that needs to be taken into consideration.

KR 101 240 536 B1 describes an air conditioner comprising a main body and a discharging body. An air inlet port is formed in the main body and a space. The discharging body is arranged in the space. The main body comprises a heat exchanger, a discharging body housing, and an air blower. Air which is inhaled to the air inlet port is heat-exchanged at the heat exchanger. The body housing protects the discharging body and has the space inside. The air blower blows the air which passes through the heat exchanger to the space.

### SUMMARY

An objective of the present invention is to provide an air-conditioner air supply apparatus in a vertical air-conditioner, so as to solve the problems described in the Background.

To achieve the foregoing objective, the following technical solutions as defined in claim 1 are used in the present invention. The dependent claims define preferred embodiments of the invention.

An air-conditioner air supply apparatus in a vertical air-conditioner is provided, where the air supply apparatus includes at least three annular air guiding bodies that are hollow and each have front and rear openings, each of the annular air guiding bodies is a single component, a rear opening of the annular air guiding body is an air inlet, a front opening thereof is an air outlet, the at least three annular air guiding bodies are arranged sequentially from front to rear, a through-duct running from front to rear is formed in the middle, an annular heat-exchanged air duct is formed between adjacent two of the annular air guiding bodies, an air inlet of a rear-end annular air guiding body located at the rear end is a non-heat-exchanged air inlet of the air supply apparatus, an air outlet of a front-end annular air guiding body located at the front end is a mixed air outlet of the air supply apparatus, and the multiple annular heat-exchanged air ducts are gradually reduced in volume in a direction from the non-heat-exchanged air inlet to the mixed air outlet.

Preferably, the annular heat-exchanged air duct has an air outlet end proximal to the through-duct and an air inlet end distal from the through-duct, surfaces of adjacent two of the annular air guiding bodies forming the annular heat-exchanged air duct are configured so as to provide air inlet end tangent circles at the air inlet end, and diameters of the air inlet end tangent circles in the multiple annular heat-exchanged air ducts that are gradually reduced by a reduction proportion of 1-20% in the direction from the non-heat-exchanged air inlet to the mixed air outlet.

Preferably, the reduction proportion of the diameters of the air inlet end tangent circles is 2-10%.

More preferably, the diameters of the air inlet end tangent circles are gradually reduced non-proportionally in the direction from the non-heat-exchanged air inlet to the mixed air outlet.

The air-conditioner air supply apparatus as described above is provided, where the annular heat-exchanged air duct has an air outlet end proximal to the through-duct and an air inlet end distal from the through-duct, surfaces of adjacent two of the annular air guiding bodies forming the heat-exchanged air duct are provided with air outlet end tangent circles at the air outlet end, and diameters of the air outlet end tangent circles in the multiple annular heat-exchanged air ducts are gradually reduced by a reduction proportion of 1-20% in the direction from the non-heat-exchanged air inlet to the mixed air outlet.

Preferably, the reduction proportion of the diameters of the air outlet end tangent circles is 5-15%.

More preferably, the diameters of the air outlet end tangent circles are gradually reduced non-proportionally in the direction from the non-heat-exchanged air inlet to the mixed air outlet.

Compared with the prior art, the present invention has the following advantages and positive effects: after the air-conditioner air supply apparatus of the present invention is applied in an air-conditioner, while heat-exchanged air in an internal duct of the air-conditioner is blown out from a front end of the through-duct, some external non-heat-exchanged air that is not subject to a heat exchange can be sucked under the action of negative pressure to participate in final air exhausting of the air-conditioner, thereby increasing an overall air inlet volume of the air-conditioner, accelerating indoor air circulation, and further improving overall uniformity of indoor air. In addition, such mixed air is milder and makes a user feel more comfortable when the air blows on the user, thereby improving a user comfort experience effect. Moreover, the air-conditioner air supply apparatus is formed by combining multiple annular air guiding bodies that are in a single component form, so that not only it is convenient to flexibly control the structure of each annular air guiding body according to an air supply requirement and manufacture annular air guiding bodies of different structures, but also it is possible to flexibly select an assembling manner of the entire air-conditioner air supply apparatus in the air-conditioner, thereby broadening an applicable range of the air-conditioner air supply apparatus and increasing production efficiency of the air-conditioner. In addition, the multiple annular heat-exchanged air ducts are gradually reduced in volume in a direction from the non-heat-exchanged air inlet to the mixed air outlet, which not only is beneficial to uniform circumferential air exhausting of the heat-exchanged air duct, but also can reduce pressure loss and noise.

Other characteristics and advantages of the present invention become clearer after specific implementation manners of the present invention are read with reference to accompanying drawings.

### BRIEF DESCRIPTION OF THE DRAWINGS

FIG. 1 is a schematic three-dimensional structural diagram of an embodiment of an air-conditioner air supply apparatus in a vertical air-conditioner of the present invention;
FIG. 2 is a schematic structural side view of the embodiment of FIG. 1;
FIG. 3 is a schematic structural radial section view of the embodiment of FIG. 1; and
FIG. 4 is a partial schematic structural radial section view of the embodiment of FIG. 1.

### DETAILED DESCRIPTION

The technical solutions of the present invention are further described in detail below with reference to the accompanying drawings and specific implementation manners.

First, technical terms involved in the specific implementation manners are briefly described as follows: when a front end or a rear end of each structural component is mentioned below, it is defined in terms of a position of a normally used structural component relative to that of a user; and when arrangement positions of multiple structural components are described as front or rear, it is defined in terms of a position of a normally used apparatus formed by the multiple structural components relative to that of a user. Heat-exchanged air described below refers to air from inside an air-conditioner and after a heat exchange of a heat exchanger; non-heat-exchanged air refers to air from environmental space in which the air-conditioner is located, which is some air, with respect to the heat-exchanged air, that is not directly from the heat exchanger: and mixed air refers to air formed by mixing the heat-exchanged air with the non-heat-exchanged air. A ring described below refers to an enclosed structure formed in a surrounding manner, but is not limited to a circular ring.

Second, design ideas of the present invention are briefly described as follows: for an air-conditioner air supply apparatus that can produce mixed air by mixing heat-exchanged air of a heat exchanger of an air-conditioner with external non-heat-exchanged air and supply the mixed air, the structure of a heat-exchanged air duct is crucial for reducing air resistance and pressure loss, and would further affect the volume of the external non-heat-exchanged air sucked by the air-conditioner air supply apparatus and the air outlet temperature of the mixed air; and the structure of the heat-exchanged air duct mainly depends on relative positions of two adjacent annular air guiding bodies that form the air duct and the structures of the annular air guiding bodies. Therefore, the present invention uses the structure of a heat-exchanged air duct, especially the shape of the heat-exchanged air duct, as a research point to seek a preferred structure that can improve performance of an air-conditioner air supply apparatus.

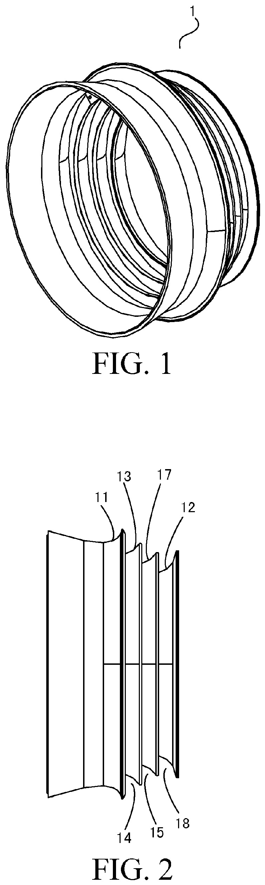

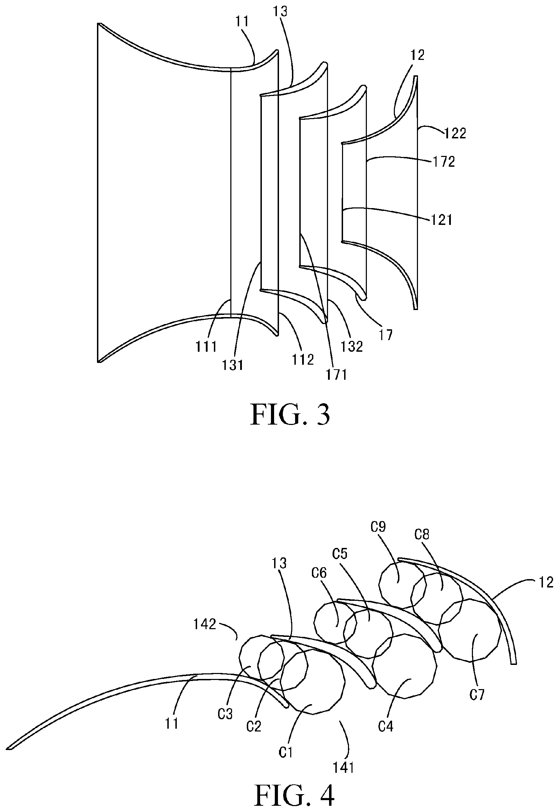

Refer to an embodiment of an air-conditioner air supply apparatus 1 of the present invention shown in FIG. 1 to FIG. 4, where FIG. 1 is a schematic three-dimensional structural diagram of this embodiment, FIG. 2 is a schematic structural side view of this embodiment, and FIG. 3 and FIG. 4 are schematic structural radial section views thereof.

As shown in FIG. 1, FIG. 2, and FIG. 3, the air-conditioner air supply apparatus 1 of this embodiment includes four annular air guiding bodies, which are a front-end annular air guiding body 11, a first middle annular air guiding body 13, a second middle annular air guiding body 17, and a rear-end annular air guiding body 12, from front to rear. Each annular air guiding body among the four annular air guiding bodies that are arranged sequentially from front to rear is a single component and is independently shaped. The front-end annular air guiding body 11 is hollow and has two openings, namely, a front opening and a rear opening, which are a mixed air outlet 111 and an air inlet 112, respectively; the first middle annular air guiding body 13 is hollow and has two openings, namely, a front opening and a rear opening, which are an air outlet 131 and an air inlet 132, respectively; the second middle annular air guiding body 17 is hollow and has two openings, namely, a front opening and a rear opening, which are an air outlet 171 and an air inlet 172, respectively; and the rear-end annular air guiding body 12 is hollow and has two openings, namely, a front opening and a rear opening, which are an air outlet 121 and a non-heat-exchanged air inlet 122. After the front-end annular air guiding body 11, the first middle annular air guiding body 13, the second middle annular air guiding body 17, and the rear-end annular air guiding body 12 are arranged sequentially from front to rear, a through-duct (not marked in the figure) running through all of the four annular air guiding bodies from front to rear is formed in the middle. In addition, a first annular heat-exchanged air duct 14 is formed between the front-end annular air guiding body 11 and the first middle annular air guiding body 13, a second annular heat-exchanged air duct 15 is formed between the first middle annular air guiding body 13 and the second middle annular air guiding body 17, and a third annular heat-exchanged air duct 18 is formed between the second middle annular air guiding body 17 and the rear-end annular air guiding body 12. The three annular heat-exchanged air ducts are gradually reduced in volume in a direction from the non-heat-exchanged air inlet 122 of the rear-end annular air guiding body 12 to the mixed air outlet 111 of the front-end annular air guiding body 11.

Specifically, as shown in FIG. 4, each annular heat-exchanged air duct has an air outlet end proximal to the through-duct of the air-conditioner air supply apparatus 1 and an air inlet end distal from the through-duct and located at a side opposite to the air outlet end, and multiple tangent circles between surfaces of two adjacent annular air guiding bodies that form the heat-exchanged air duct describe each annular heat-exchanged air duct. For example, three tangent circles, which are C1, C2, and C3, exist in the first annular heat-exchanged air duct 14. C1 is an air inlet end tangent circle, C2 is a middle tangent circle, C3 is an air outlet end tangent circle, and diameters of the three circles are D1, D2, and D3, respectively. Three tangent circles, which are C4, C5, and C6, exist in the second annular heat-exchanged air duct 15. C4 is an air inlet end tangent circle, C5 is a middle tangent circle, C6 is an air outlet end tangent circle, and diameters of the three circles are D4, D5, and D6, respectively. Three tangent circles, which are C7, C8, and C9, exist in the third annular heat-exchanged air duct 18. C7 is an air inlet end tangent circle, C8 is a middle tangent circle, C9 is an air outlet end tangent circle, and diameters of the three circles are D7, D8, and D9, respectively. The following condition is met between different annular heat-exchanged air ducts: diameters of air inlet end tangent circles and diameters of air outlet end tangent circles in multiple annular heat-exchanged air ducts are all gradually reduced by a reduction proportion of 1-20% in a direction from the non-heat-exchanged air inlet 122 to the mixed air outlet 111, that is: D4/D7=[1-(1-20%)], D1/D4=[1-(1-20%)], D6/D9=[1-(1-20%)], and D3/D6=[1-(1-20%)]. As a more preferred embodiment, D4/D7=[1-(2-10%)], D1/D4=[1-(2-10%)], D6/D9=[1-(5-15%)], D3/D6=[1-(5-15%)], and D4/D7≠D1/D4, and D6/D9#D3/D6, that is, the diameters are gradually reduced non-proportionally.

However, in this embodiment, any heat-exchanged air duct is further arranged according to the following condition: if the first annular heat-exchanged air duct 14 formed between the front-end annular air guiding body 11 and the first middle annular air guiding body 13 is used as an example, the duct is gradually scaled down in a direction from an air inlet end 141 thereof to an air outlet end 142.

Specifically, in the partial schematic structural radial section view shown in FIG. 4, arrangement of positions of the front-end annular air guiding body 11 and the first middle annular air guiding body 13 enables the diameters of the tangent circles between the surfaces of the two annular air guiding bodies located in the first annular heat-exchanged air duct 14 to be gradually reduced by a reduction proportion of 5-25% in a direction from the air inlet end 141 to the air outlet end 142, and gradually reduced at a non-proportional reduction speed. A more preferred reduction proportion is 10-20%. That is, D3/D2=[1-(5-25%)], and D2/D1=[1-(5-25%)]. Preferably, D3/D4=[1-(10-20%)], D2/D1=[1-(10-20%)], and D3/D2≠D2/D1. In addition, in this embodiment, the following relationship is further satisfied between the diameter D1 of the air inlet end tangent circle C1 and the diameter D3 of the air outlet end tangent circle C3: D3/D1=60-70%. More preferably, D3/D1=65%.

Likewise, the second annular heat-exchanged air duct 15 is also arranged according to the foregoing condition, that is: D6/D5=[1-(5-25%)], and D5/D4=[1-(5-25%)]. Preferably, D6/D5=[1-(10-20%)], D5/D4=[1-(10-20%)], and D6/D5≠D5/D4. In addition, D6/D4=60-70%. More preferably, D6/D4=65%.

Similarly, the third annular heat-exchanged air duct 18 is also arranged according to the foregoing condition, that is: D9/D8=[1-(5-25%)], and D8/D7=[1-(5-25%)]. Preferably, D9/D8=[1-(10-20%)], D8/D7=[1-(10-20%)], and D9/D8#D8/D7. In addition, D9/D7=60-70%. More preferably, D9/D7=65%.

In this embodiment, the air-conditioner air supply apparatus 1 is formed by combining multiple annular air guiding bodies that are in a single component form, so that it is convenient to flexibly control the structure of each annular air guiding body according to an air supply requirement and manufacture annular air guiding bodies of different structures, so as to ensure uniformity of air supply and an air supply speed. In addition, because each annular air guiding body is a single component, it is possible to flexibly select an assembling manner of the entire air-conditioner air supply apparatus 1 in the air-conditioner, thereby broadening an applicable range of the air-conditioner air supply apparatus 1 and increasing production efficiency of the air-conditioner. In addition, after the heat-exchanged air duct of the foregoing structure is used in the air-conditioner air supply apparatus 1, not only it is beneficial to uniform circumferential air exhausting of the heat-exchanged air duct, but also a direction of the heat-exchanged air can be changed, so that both the heat-exchanged air and the non-heat-exchanged air are blown out along a surface of the annular air guiding body, thereby effectively avoiding occurrence of problems, such as air speed reduction, noise generation, and condensation, caused by confluence and collision of the two parts of air on a surface of a non-annular air guiding body in the through-duct.

When the air-conditioner air supply apparatus 1 is applied in the air-conditioner, the mixed air outlet 111 of the front-end annular air guiding body 11, as an air outlet of the entire air-conditioner air supply apparatus 1, is assembled together with a mixed air outlet provided on a front panel of the air-conditioner in an enclosed manner; while the non-heat-exchanged air inlet 122 in the rear-end annular air guiding body 12, as a non-heat-exchanged air inlet of the entire air-conditioner air supply apparatus 1, is assembled together with a non-heat-exchanged air inlet provided on a rear panel of the air-conditioner in an enclosed manner. In addition, an internal duct in the air-conditioner is in communication with the through-duct in the air-conditioner air supply apparatus 1 through the first annular heat-exchanged air duct 14, the second annular heat-exchanged air duct 15, and the third heat-exchanged air duct 18, so as to supply the heat-exchanged air after a heat exchange of the heat exchanger of the air-conditioner to the through-duct through the annular heat-exchanged air duct.

After the air-conditioner air supply apparatus 1 of the foregoing structure is used in the air-conditioner, when the air-conditioner runs, indoor air enters the interior of the air-conditioner, and is accelerated and blown to the heat exchanger under the action of a fan for a heat exchange. The heat-exchanged air after the heat exchange is blown to the air-conditioner air supply apparatus 1 from the internal duct, enters the through-duct through the respective annular heat-exchanged air ducts, and is further blown out from the mixed air outlet 111 in the front-end annular air guiding body 11 and the mixed air outlet on the front panel through the through-duct. Because the heat-exchanged air duct is of a gradually reduced structure, an air speed of the heat-exchanged air blown out of the annular heat-exchanged air duct becomes higher, so that negative pressure is formed in the through-duct due to reduction of surface pressure of a corresponding annular air guiding body, indoor air outside the air-conditioner, as the non-heat-exchanged air, enters the through-duct through the non-heat-exchanged air inlet on the rear panel and the non-heat-exchanged air inlet 122 of the rear-end annular air guiding body 12 under the action of the negative pressure and forms mixed air together with the heat-exchanged air blown out of the annular heat-exchanged air duct, and the mixed air is supplied indoor. Such mixed air is milder and makes a user feel more comfortable when the air blows on the user, thereby improving a user comfort experience effect. Meanwhile, some external non-heat-exchanged air that is not subject to a heat exchange can be sucked under the action of the negative pressure generated by the air supply apparatus 1 to participate in final air exhausting of the air-conditioner, thereby increasing an overall air inlet volume of the air-conditioner, accelerating indoor air circulation, and further improving overall uniformity of indoor air.

In this embodiment, which serves as a preferred implementation manner, each annular air guiding body in the air-conditioner air supply apparatus 1 is in a circular ring shape, but is not limited thereto, and may further be designed into another shape, such as an elliptical ring or a regular polygonal ring, which can also achieve the technical objectives of the present invention.

## Claims

1. An air-conditioner air supply apparatus (1) in a vertical air-conditioner, wherein the air supply apparatus (1) comprises at least three annular air guiding bodies (11, 12, 13, 17) that are hollow and each have front and rear openings, each of the annular air guiding bodies (11, 12, 13, 17) is a single component, a rear opening of the annular air guiding body (11, 12, 13, 17) is configured as an air inlet (112, 122, 132), a front opening thereof is configured as an air outlet (121, 131, 171), the at least three annular air guiding bodies (11, 12, 13, 17) are arranged sequentially from front to rear, a through-duct running from front to rear is formed in the middle, an annular heat-exchanged air duct (14, 15, 18) is formed between each adjacent two of the at least three annular air guiding bodies (11, 12, 13, 17), an air inlet of a rear-end annular air guiding body (12) located at the rear end is configured as a non-heat-exchanged air inlet (122) of the air supply apparatus, an air outlet of a front-end annular air guiding body (11) located at the front end is configured as a mixed air outlet (111) of the air supply apparatus, and the multiple annular heat-exchanged air ducts (14, 15, 18) are gradually reduced in volume in a direction from the non-heat-exchanged air inlet (122) to the mixed air outlet (111).

2. The air-conditioner air supply apparatus (1) according to claim 1, wherein the annular heat-exchanged air duct (14, 15, 18) has an air outlet end proximal to the through-duct and an air inlet end distal from the through-duct, surfaces of each adjacent two of the annular air guiding bodies (11, 12, 13, 17) forming the annular heat-exchanged air duct (14, 15, 18) are configured so as to provide air inlet end tangent circles (C1, C4, C7) at the air inlet end, and diameters (D1, D4, D7) of the air inlet end tangent circles (C1, C4, C7) in the multiple annular heat-exchanged air ducts (14, 15, 18) that are gradually reduced by a reduction proportion of 1-20% in the direction from the non-heat-exchanged air inlet (122) to the mixed air outlet (111).

3. The air-conditioner air supply apparatus (1) according to claim 2, wherein the reduction proportion of the diameters (D1, D4, D7) of the air inlet end tangent circles (C1, C4, C7) is 2-10%.

4. The air-conditioner air supply apparatus (1) according to claim 2 or 3, wherein the diameters (D1, D4, D7) of the air inlet end tangent circles (C1, C4, C7) are gradually reduced non-proportionally in the direction from the non-heat-exchanged air inlet (122) to the mixed air outlet (111).

5. The air-conditioner air supply apparatus (1) according to claim 1, wherein the annular heat-exchanged air duct (14, 15, 18) has an air outlet end proximal to the through-duct and an air inlet end distal from the through-duct, surfaces of adjacent two of the annular air guiding bodies (11, 12, 13, 17) forming the heat-exchanged air duct (14, 15, 18) are configured to provide air outlet end tangent circles (C3, C6, C9) at the air outlet end, and diameters (D3, D6, D9) of the air outlet end tangent circles (C3, C6, C9) in the multiple annular heat-exchanged air ducts (14, 15, 18) that are gradually reduced by a reduction proportion of 1-20% in the direction from the non-heat-exchanged air inlet (122) to the mixed air outlet (111).

6. The air-conditioner air supply apparatus (1) according to claim 5, wherein the reduction proportion of the diameters (D3, D6, D9) of the air outlet end tangent circles (C3, C6, C9) is 5-15%.

7. The air-conditioner air supply apparatus (1) according to claim 5 or 6, wherein the diameters (D3, D6, D9) of the air outlet end tangent circles (C3, C6, C9) are gradually reduced non-proportionally in the direction from the non-heat-exchanged air inlet (122) to the mixed air outlet (111).

## Patentansprüche

1. Luftzufuhrvorrichtung für eine Klimaanlage (1) in einer vertikalen Klimaanlage, wobei die Luftzufuhrvorrichtung (1) mindestens drei ringförmige Luftführungskörper (11, 12, 13, 17) umfasst, die hohl sind und jeweils vordere und hintere Öffnungen aufweisen, jeder der ringförmigen Luftführungskörper (11, 12, 13, 17) eine Einzelkomponente ist, eine hintere Öffnung der ringförmige Luftführungskörper (11, 12, 13, 17) ausgestaltet ist als
ein Lufteinlass (112, 122, 132), eine vordere Öffnung dessen ausgestaltet ist als ein Luftauslass (121, 131, 171), die mindestens drei ringförmigen Luftführungskörper (11, 12, 13, 17) von der Vorderseite zu der Hinterseite nacheinander angebracht sind, ein Durchgangskanal, der von der Vorderseite zu der Hinterseite verläuft, in der Mitte ausgebildet ist, ein ringförmiger Wärmeaustauschluftkanal (14, 15, 18) zwischen jeweils zwei benachbarten der mindestens drei ringförmigen Luftführungskörper (11, 12, 13, 17) ausgebildet ist, ein an dem Hinterteil ausgebildeter Lufteinlass eines hinteren ringförmigen Luftführungskörper (12) ausgestaltet ist als ein Lufteinlass ohne Wärmeaustausch (122) der Luftzufuhrvorrichtung,
ein an dem Vorderteil ausgebildeter Lufteinlass eines vorderen ringförmigen Luftführungskörper (11) ausgestaltet ist als
ein gemischter Lufteinlass (111) der Luftzufuhrvorrichtung, und die mehreren ringförmigen Wärmeaustauschluftkanäle (14, 15, 18) im Volumen schrittweise in eine Richtung von dem Lufteinlass ohne Wärmeaustausch (122) zu dem gemischten Lufteinlass (111) reduziert werden.

2. Luftzufuhrvorrichtung für eine Klimaanlage (1) nach Anspruch 1, wobei der ringförmige Wärmeaustauschluftkanal (14, 15, 18) ein Luftauslassende nahe dem Durchgangskanal und ein Lufteinlassende entfernt von dem Durchgangskanal aufweist, Oberflächen von jeweils zwei benachbarten der ringförmigen Luftführungskörper (11, 12, 13, 17), die den ringförmigen Wärmeaustauschluftkanal (14, 15, 18) bilden, ausgestaltet sind, um Lufteinlassende-Tangientalkreise (C1, C4, C7) an dem Lufteinlassende, und Durchmesser (D1, D4, D7) der Lufteinlassende-Tangientalkreise (C1, C4, C7) in den mehreren ringförmigen Wärmeaustauschluftkanälen (14, 15, 18), die schrittweise um ein Reduzierungsanteil von 1-20 % in eine Richtung von dem Lufteinlass ohne Wärmeaustausch (122) zu dem gemischten Lufteinlass (111) reduziert werden, bereitzustellen.

3. Luftzufuhrvorrichtung für eine Klimaanlage (1) nach Anspruch 2, wobei der Reduzierungsanteil der Durchmesser (D1, D4, D7) der Lufteinlassende-Tangientalkreise (C1, C4, C7) 2-10 % beträgt.

4. Luftzufuhrvorrichtung für eine Klimaanlage (1) nach Anspruch 2 oder 3, wobei die Durchmesser (D1, D4, D7) der Lufteinlassende-Tangientalkreise (C1, C4, C7) schrittweise nichtproportional in die Richtung von dem Lufteinlass ohne Wärmeaustausch (122) zu dem gemischten Lufteinlass (111) reduziert werden.

5. Luftzufuhrvorrichtung für eine Klimaanlage (1) nach Anspruch 1, wobei der ringförmige Wärmeaustauschluftkanal (14, 15, 18) ein Luftauslassende nahe dem Durchgangskanal und ein Lufteinlassende entfernt von dem Durchgangskanal aufweist, Oberflächen von benachbarten Paaren der drei ringförmigen Luftführungskörper (11, 12, 13, 17), die den Wärmeaustauschluftkanal (14, 15, 18) bilden, ausgestaltet sind, um Lufteinlassende-Tangientalkreise (C3, C6, C9) an dem Luftauslassend und Durchmesser (D3, D6, D9) der Lufteinlassende-Tangientalkreise (C3, C6, C9) in den mehreren ringförmigen Wärmeaustauschluftkanälen (14, 15, 18), die schrittweise um ein Reduzierungsanteil von 1-20 % in eine Richtung von dem Lufteinlass ohne Wärmeaustausch (122) zu dem gemischten Lufteinlass (111) reduziert werden, bereitzustellen.

6. Luftzufuhrvorrichtung für eine Klimaanlage (1) nach Anspruch 5, wobei der Reduzierungsanteil der Durchmesser (D3, D6, D9) der Luftauslassende-Tangientalkreise (C3, C6, C9) 5-15% beträgt.

7. Luftzufuhrvorrichtung für eine Klimaanlage (1) nach Anspruch 5 oder 6, wobei die Durchmesser (D3, D6, D9) der Luftauslassende-Tangientalkreise (C3, C6, C9) schrittweise nichtproportional in die Richtung von dem Lufteinlass ohne Wärmeaustausch (122) zu dem gemischten Lufteinlass (111) reduziert werden.

## Revendications

1. Appareil d'alimentation en air de climatiseur (1) dans un climatiseur vertical, l'appareil d'alimentation en air (1) comprenant au moins trois corps de guidage d'air annulaires (11, 12, 13, 17) qui sont creux et chacun des trois corps ayant des ouvertures frontales et arrière, chacun des corps de guidage d'air annulaires (11, 12, 13, 17) étant un composant unique, une ouverture arrière du corps de guidage d'air annulaire (11, 12, 13, 17) étant conçue comme
une admission d'air (112, 122, 132), une ouverture frontale de celle-ci étant conçue comme
une sortie d'air (121, 131, 171), les au moins trois corps de guidage d'air annulaires (11, 12, 13, 17) étant disposés de façon séquentielle de l'avant vers l'arrière, une conduite traversante s'étendant de l'avant vers l'arrière étant formée au milieu, une conduite d'air de chaleur échangée annulaire (14, 15, 18) étant formée entre chacun des deux corps de guidage d'air annulaires adjacents parmi les au moins trois corps de guidage d'air annulaires (11, 12, 13, 17), une admission d'air d'un corps de guidage d'air annulaire d'extrémité arrière (12) située à l'extrémité arrière étant conçue comme
une admission d'air sans chaleur échangée (122) de l'appareil d'alimentation en air, une sortie d'air d'un corps de guidage d'air annulaire d'extrémité avant (11) située sur l'extrémité avant étant conçue comme
une sortie d'air mélangé (111) de l'appareil d'alimentation en air, et les conduites d'air de chaleur échangée annulaires multiples (14, 15, 18) étant progressivement réduites en volume dans une direction de la sortie d'air sans chaleur échangée (122) vers la sortie d'air mélangé (111).

2. Appareil d'alimentation en air (1) selon la revendication 1, la conduite d'air de chaleur échangée annulaire (14, 15, 18) ayant une extrémité de sortie d'air proximale par rapport à la conduite traversante et une extrémité d'admission d'air distale par rapport à la conduite traversante, des surfaces de chacun des deux corps de guidage d'air annulaires adjacents parmi les corps de guidage d'air annulaires (11, 12, 13, 17) formant la conduite d'air de chaleur échangée annulaire (14, 15, 18) étant conçues afin de fournir des cercles tangents d'extrémité d'admission d'air (C1, C4, C7) à l'extrémité d'admission d'air, et des diamètres (D1, D4, D7) des cercles tangents d'extrémité d'admission d'air (C1, C4, C7) dans les conduites d'air de chaleur échangée annulaires multiples (14, 15, 18) qui sont progressivement réduits avec une proportion de réduction de 1-20 % dans la direction de l'admission d'air sans chaleur échangée (122) vers la sortie d'air mélangé (111).

3. Appareil d'alimentation en air de climatiseur (1) selon la revendication 2, la proportion de réduction des diamètres (D1, D4, D7) des cercles tangents d'extrémité d'admission d'air (C1, C4, C7) étant de 2-10 %.

4. Appareil d'alimentation en air de climatiseur (1) selon la revendication 2 ou 3, les diamètres (D1, D4, D7) des cercles tangents d'extrémité d'admission d'air (C1, C4, C7) étant progressivement réduits de façon non proportionnelle dans la direction de l'admission d'air sans chaleur échangée (122) vers la sortie d'air mélangé (111).

5. Appareil d'alimentation en air (1) selon la revendication 1, la conduite d'air de chaleur échangée annulaire (14, 15, 18) ayant une extrémité de sortie d'air proximale par rapport à la conduite traversante et une extrémité d'admission d'air distale par rapport à la conduite traversante, des surfaces de deux corps de guidage d'air annulaires adjacents parmi les corps de guidage d'air annulaires (11, 12, 13, 17) formant la conduite d'air de chaleur échangée (14, 15, 18) étant conçues afin de fournir des cercles tangents d'extrémité de sortie d'air (C3, C6, C9) à l'extrémité de sortie d'air, et des diamètres (D3, D6, D9) des cercles tangents d'extrémité de sortie d'air (C3, C6, C9) dans les conduites d'air de chaleur échangée annulaires multiples (14, 15, 18) qui sont progressivement réduites avec une proportion de réduction de 1-20 % dans la direction de l'admission d'air sans chaleur échangée (122) vers la sortie d'air mélangé (111).

6. Appareil d'alimentation en air de climatiseur (1) selon la revendication 5, la proportion de réduction des diamètres (D3, D6, D9) des cercles tangents d'extrémité de sortie d'air (C3, C6, C9) étant de 5-15 %.

7. Appareil d'alimentation en air de climatiseur (1) selon la revendication 5 ou 6, les diamètres (D3, D6, D9) des cercles tangents d'extrémité de sortie d'air (C3, C6, C9) étant progressivement réduits de façon non proportionnelle dans la direction de l'admission d'air sans chaleur échangée (122) vers la sortie d'air mélangé (111).
